# EUROPÄISCHE PATENTSCHRIFT

(11) **EP 2 156 086 B1**
(45) Veröffentlichungstag und Bekanntmachung des Hinweises auf die Patenterteilung: **13.05.2015**
(21) Anmeldenummer: 07764628.9
(22) Anmeldetag: 13.06.2007
(51) Int. Cl.: F16L 11/127, F16L 25/01, H01R 13/00

(54) **VERFAHREN UND VORRICHTUNG ZUR ELEKTRISCHEN SIGNAL- UND/ODER ENERGIEÜBERTRAGUNG ÜBER EINE FLEXIBLE FLUIDISCHE SCHLAUCHLEITUNG**
METHOD AND DEVICE FOR TRANSFERRING ELECTRICAL SIGNALS AND/OR ENERGY OVER A FLEXIBLE FLUIDIC CONDUIT
PROCÉDÉ ET DISPOSITIF DE TRANSMISSION D'ÉNERGIE ÉLECTRIQUE ET / OU DE SIGNAUX ÉLECTRIQUES PAR L'INTERMÉDIAIRE D'UNE CONDUITE FLUIDIQUE FLEXIBLE

(43) Veröffentlichungstag der Anmeldung: 24.02.2010
(73) Patentinhaber: FESTO AG & Co. KG, 73734 Esslingen (DE)
(72) Erfinder: VEIT, Eberhard, 73033 Göppingen (DE); BINDER, Josef, 73095 Albershausen (DE); KIESSLING, Albert, 71263 Weil der Stadt (DE)
(74) Vertreter: Patentanwälte Magenbauer & Kollegen Partnerschaft mbB
(86) Internationale Anmeldenummer: PCT/EP2007/005189
(87) Internationale Veröffentlichungsnummer: WO 2008/151645

(56) Entgegenhaltungen:
- US-A- 2 379 800
- US-A1- 2004 025 682

## Beschreibung

Die Erfindung betrifft ein Verfahren und eine Vorrichtung zur elektrischen Signal- und/oder Energieübertragung über eine flexible fluidische Schlauchleitung, deren Endbereiche mit fluidischen Anschlusselementen versehen sind beziehungsweise in solchen Anschlusselementen gehalten sind, und an oder in deren Leitungswandung wenigstens zwei elektrische Leiter integriert sind.

Eine aus der EP 1330610 B1 bekannte Vorrichtung dieser Art weist fluidische Anschlusselemente auf, die an den Enden solcher flexibler Schlauchleitungen angebracht werden. Diese Anschlusselemente besitzen zur endseitigen Stirnseite der einzusteckenden Schlauchleitung hin weisende Kontaktspitzen, die beim Einstecken der Schlauchleitung in das jeweilige Anschlusselement in die elektrischen Leiter eindringen und den elektrischen Kontakt herstellen. Bei diesen bekannten Vorrichtungen hat es sich als nachteilig herausgestellt, dass infolge der durch fluidische Druckstöße verursachten mechanischen Belastungen und Schwingungen die Kontaktspitzen Relativbewegungen zur Schlauchleitung erfahren, die zur Folge haben, dass die elektrische Verbindung mit der Zeit nicht mehr zuverlässig existiert.

Aus der US 2,379,800 ist ein Bohrgestänge bekannt, bei dem eine Weiterleitung von Sensordaten zwischen einzelnen Gestängeabschnitten mit Hilfe eines induktiven spulensystems vorgesehen ist, so dass Sensorsignale eines am unteren Ende des Bohrgestänges vorgesehenen Sensors durch das Bohrgestänge hindurch bis zu einem oberen Ende des Bohrgestänges und einen dort angeordneten Messgerät übertragen werden können. Jeder der Bohrgestängeabschnitte ist jeweils endseitig mit einer Spulenanordnung versehen, die eine induktive Kopplung mit einem nachfolgenden bzw. vorhergehenden Bohrgestängeabschnitt ermöglicht.

Eine Aufgabe der vorliegenden Erfindung besteht darin, ein Verfahren und eine Vorrichtung der eingangs genannten Gattung zu schaffen, bei der auch nach längerem Gebrauch die elektrische Verbindung noch zuverlässig und sicher und unbeeinflusst von mechanischen Belastungen und Schwingungen vorliegt.

Diese Aufgabe wird erfindungsgemäß durch ein Verfahren mit den Merkmalen des Anspruchs 1 und eine Vorrichtung mit den Merkmalen des Anspruchs 7 gelöst.

Das erfindungsgemäße Verfahren beziehungsweise die erfindungsgemäße Vorrichtung hat den Vorteil, dass die Signal- und/oder Energieübertragung zwischen der Schlauchleitung und deren elektrischen Leitern einerseits und dem jeweiligen Anschlusselement andererseits kontaktlos, nämlich induktiv, erfolgt. Bewegungen der Schlauchleitung im Anschlusselement haben somit keinen Einfluss mehr auf die elektrische Übertragung, sodass diese auch bei längerem Gebrauch noch sicher funktioniert. Die in den beiden Endbereichen der Schlauchleitung angeordneten und mit deren Leitern jeweils verbundenen induktiven Spulen bewegen sich bei eventuellen Druckstößen oder fluidischen Schwingungen zusammen mit der Schlauchleitung, sodass die elektrischen Verbindungen keine Relativbewegungen erfahren, wenn sich die Schlauchleitung im Anschlusselement bewegt.

Durch die in den Unteransprüchen aufgeführten Maßnahmen sind vorteilhafte Weiterbildungen und Verbesserungen des im Anspruch 1 angegebenen Verfahrens und der im Anspruch 7 angegebenen Vorrichtung möglich.

Das elektrische Ein- und/oder Auskuppeln von zu übertragenden Signalen oder zu übertragender Energie erfolgt in vorteilhafter Weise transformatorisch, wozu vorzugsweise die Spule in der Schlauchleitung zusammen mit einer im oder am entsprechenden Anschlusselement angeordneten weiteren Spule jeweils einen transformatorischen Übertrager bildet.

Zur Erhöhung der Energieeffizienz und zur Miniaturisierung der Steckverbindung werden Sende- und Empfängerspule, also die beiden Spulen in den Endbereichen der Schlauchleitung, mit hochpermeablen Kernen mit niedrigen Verlustfaktoren versehen. Die Kerne sind so gestaltet, dass sie im Fluidstrom einen möglichst geringen Strömungswiderstand darstellen und insbesondere als Flachkerne ausgebildet sind.

In einer vorteilhaften Ausbildung sind die Anschlusselemente aus einem magnetisch permeablen Material hergestellt, wobei der Kern insbesondere mit einem sich zur Innenwandung des jeweiligen Anschlusselements erstreckenden Jochglied versehen ist, sodass die jeweilige Spule beziehungsweise der jeweilige Übertrager einen möglichst geschlossenen Kern mit möglichst geringen Luftspalten aufweist. Der Kern und das damit verbundene Jochglied sind dabei zur Verringerung des Strömungswiderstands als dünnes Plättchen oder Platine in Flachbauweise ausgebildet.

In einer ersten Ausgestaltung der Signalübertragung wird an die weitere Spule des einen Anschlusselements ein jeweiliger Sensor angeschlossen, dessen Signal übertragen werden soll, und an die weitere Spule des anderen Anschlusselements wird eine einen Innenwiderstand aufweisende Spannungsversorgungseinrichtung angeschlossen, wobei Mittel zur Erfassung und Auswertung des Spannungsabfalls an diesem Innenwiderstand vorgesehen sind.

Weist die Sensoreinrichtung einen sich bewegenden Permanentmagneten auf, so kann in vorteilhafter Weise auch zur elektrischen Signaleinkopplung ein hochpermeabler Kern der induktiven Spule mittels des Magneten ganz oder teilweise in die Sättigung getrieben werden, bzw. der Kern weist in Anhängigkeit der sich verändernden Position des Magneten eine teilweise bis zu einer vollständigen Sättigung auf. Die weitere Spule kann dann auf dieser Seite der Schlauchleitung entfallen.

Schließlich kann zur elektrischen Signalübertragung auch das Signal, insbesondere ein Sensor- oder Steuersignal, mittels Amplituden-, Phasen-, Frequenz- oder Pulsmodulation an einem Anschlusselement aufmoduliert und am anderen Anschlusselement demoduliert werden.

Zur elektrischen Signal- und/oder Energieübertragung wird bevorzugt eine Wechselspannung mit einer Frequenz zwischen 10 kHz und 100 kHz verwendet. Dies dient ebenfalls zur Erhöhung der Energieeffizienz. Geringere Frequenzen hätten unverhältnismäßig große Spulen mit niedriger Güte zur Folge, während höhere Frequenzen wegen der Ummagnetisierungsverluste und der Abstrahlung elektromagnetischer Energie zu vermeiden sind. Außerdem liegen höhere Frequenzen im Radiofrequenzbereich und würden zu unzulässigen Funkstörungen führen. Darüber hinaus führt die Verwendung von Frequenzen im vorgeschlagenen Frequenzbereich zu einem relativ geringen Aufwand, da die erforderlichen elektronischen Schaltkreise millionenfach in Schaltnetzteilen für Computer und Ähnlichem verwendet werden.

Die Verbindung der elektrischen Spule in der Schlauchleitung mit deren Leitern erfolgt über mit der Spule verbundene Kontaktelemente, zum Beispiel Kontaktspitzen oder Kontaktzungen. Da sich die Spule zusammen mit der Schlauchleitung im Falle von fluidischen Stößen oder Vibrationen bewegt, besteht keine Gefahr von sich verschlechternden elektrischen Kontakten.

Zur Stromversorgung von angeschlossenen Aktoren oder Sensoren wird die insbesondere transformatorisch übertragene Wechselspannung gleichgerichtet, wozu vorzugsweise ohnehin vorhandene Verpolschutzdioden dienen können. Die Speicherung der gewonnenen Gleichspannung kann ebenfalls in ohnehin vorhandenen Siebkondensatoren erfolgen.

Ausführungsbeispiele der Erfindung sind in der Zeichnung dargestellt und in der nachfolgenden Beschreibung näher erläutert. Es zeigen:
- Figur 1: eine Vorrichtung zur elektrischen Signal- und/oder Energieübertragung über eine flexible Schlauchleitung mit endseitig angebrachten Anschlusselementen als Ausführungsbeispiel der Erfindung,
- Figur 2: einen mit einem fluidischen Anschlusselement versehenen fluidischen Zylinder mit einer Spule im Anschlusselement zur magnetischen Sensierung der Kolbenposition,
- Figur 3: eine vergrößerte Darstellung eines fluidischen Anschlusselements, wobei die Spule über Kontaktspitzen mit den elektrischen Leitern der Schlauchleitung verbunden ist, im Längsschnitt,
- Figur 4: die in Figur 3 dargestellte Schlauchleitung im Querschnitt im Bereich der Kontaktspitzen,
- Figur 5: den Endbereich einer Schlauchleitung mit über Kontaktzungen kontaktierter Spule im Längsschnitt und
- Figur 6: die in Figur 5 dargestellte Schlauchleitung im Querschnitt im Bereich der Kontaktzungen.

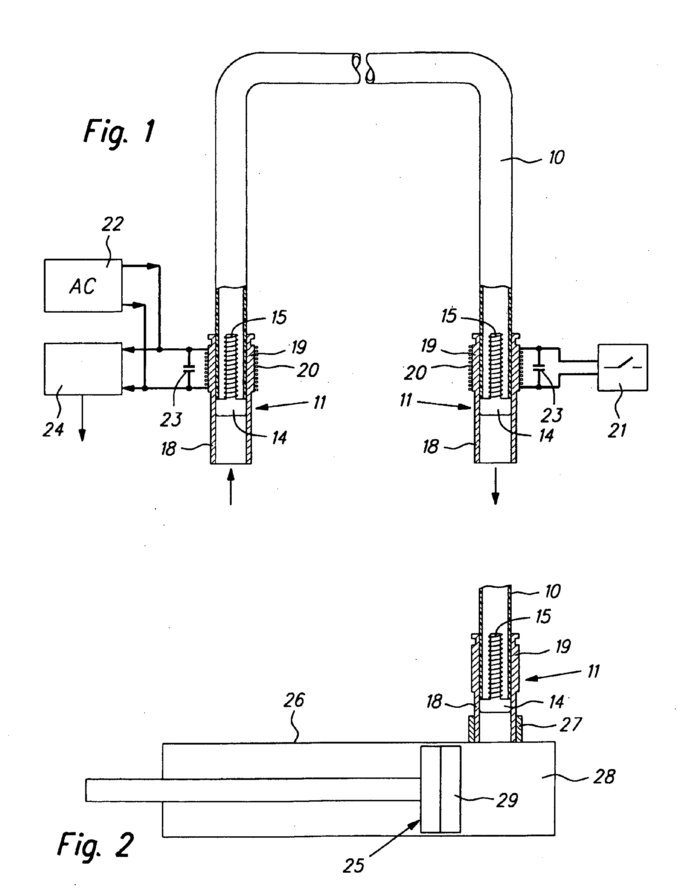

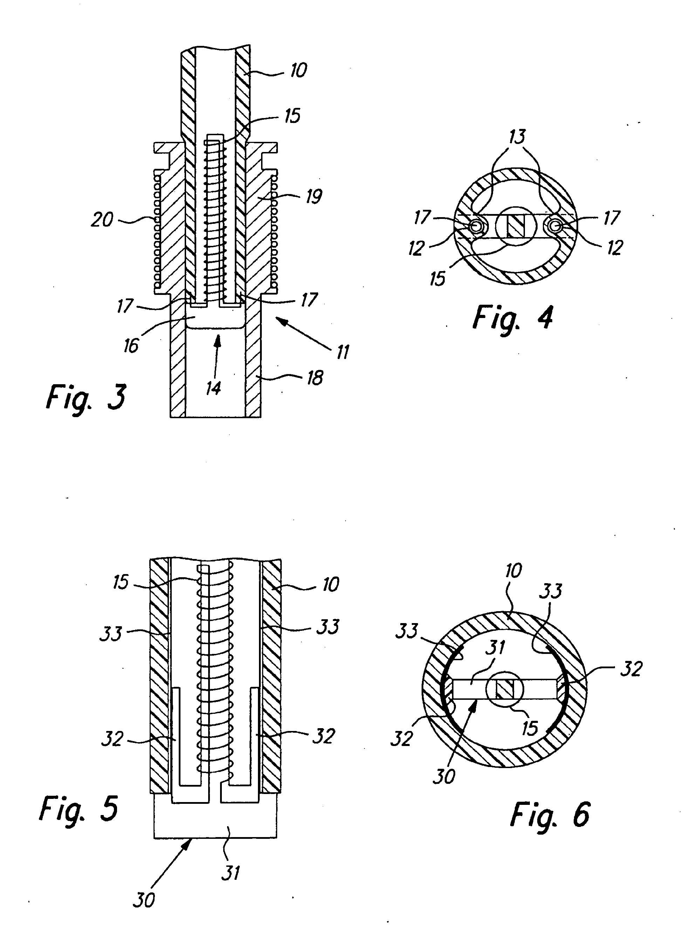

Bei dem in Figur 1 dargestellten Ausführungsbeispiel sind die beiden freien Endbereiche einer flexiblen fluidischen Schlauchleitung 10 mit fluidischen Anschlusselementen 11 versehen, von denen eines in Figur 3 vergrößert dargestellt ist. Fluidische Anschlusselemente, wie sie beispielsweise aus dem eingangs angegebenen Stand der Technik bekannt sind, dienen dazu, die Schlauchleitung 10 zum einen fluidisch mit einer Druckquelle und zum anderen mit einem fluidischen Verbraucher, wie einem Ventil, einem Linearantrieb, einem Arbeitszylinder und dergleichen, zu verbinden. Hierzu werden die Anschlusselemente 11 in entsprechende fluidische Steckaufnahmen eingesteckt oder - falls sie mit einem Außengewinde versehen sind - eingeschraubt. Derartige Steck- und Schraubverbindungen sind in vielen Variationen bekannt.

Die Schlauchleitung 10, wie sie in Figur 4 im Querschnitt dargestellt ist, besitzt zwei integrierte elektrische Leiter 12, die in sich radial nach innen erstreckenden leistenförmigen Erhebungen 13 verlaufen. Ein T-förmiges flaches Plättchen 14 dient als Spulenträger und Kernträger und ist beispielsweise nach Art einer Leiterplatte ausgebildet. Der leistenförmige lineare Bereich des Plättchens 14 trägt eine induktive Spule 15, und ein quer dazu verlaufender Querzweig 16 liegt jeweils mit seinen Enden an der Stirnfläche der Schlauchleitung 10 so an, dass zwei Kontaktspitzen 17 in die leistenförmigen Erhebungen 13 eingreifen und den elektrischen Kontakt mit den elektrischen Leitern 12 herstellen. Die beiden Enden der Spule 15 sind über beispielsweise als Leiterbahnen ausgebildete Leiter mit den beiden Kontaktspitzen 17 verbunden.

Das Plättchen 14, das heißt der die Spule 15 tragende lineare Bereich und der Querzweig 16, sind mit einem hochpermeablen Kernmaterial mit niedrigem Verlustfaktor versehen. Dieses Kernmaterial ist entweder in Form einer Beschichtung oder Laminierung aufgebracht oder das Plättchen 14 besteht insgesamt aus einem solchen Kernmaterial. Dieses Kernmaterial kann ein amorphes, kristallines oder nanokristallines Magnetmaterial sein, wobei auch ein Ferritmaterial oder ein kunststoffgebundenes Ferritmaterial möglich ist. Die Anschlusselemente 11 selbst bestehen ebenfalls aus einem hochpermeablen Kernmaterial beziehungsweise aus einem Material mit guter magnetischer Permeabilität, sodass die Spule 15 von einem möglichst geschlossenen Kern bei möglichst geringen Luftspalten umschlossen ist.

Das T-förmige Plättchen 14 ist so flach ausgebildet, dass es einen möglichst geringen Strömungswiderstand für das durchströmende Fluid bildet.

Jedes Anschlusselement 11 besitzt einen rohrförmigen Anschlussbereich 18 zum Einstecken und zum Verbinden mit einer nicht dargestellten fluidischen Einrichtung. Falls der Anschlussbereich 18 mit einem Außengewinde versehen ist, erfolgt die Verbindung durch Einschrauben. Eventuell erforderliche Abdichtungen sind zur Vereinfachung nicht dargestellt. An den Anschlussbereich 18 schließt sich einstückig ein Aufnahmebereich 19 zur Aufnahme des Endbereichs der Schlauchleitung 10 an. Die mit dem Plättchen 14 und der Spule 15 versehene und kontaktierte Schlauchleitung 10 wird in den Aufnahmebereich 19 eingesteckt und dichtend verklemmt. Hierzu können bekannte Klemmvorrichtungen dienen, wie sie beispielsweise im eingangs angegebenen Stand der Technik näher beschrieben sind. Bei geringem Druck kann auch ein einfaches Einstecken und Fixieren durch Reibung oder eventuelle Klebemittel ausreichen.

Der Aufnahmebereich 19 ist außen mit einer weiteren induktiven Spule 20 versehen, die zusammen mit der inneren Spule 15 einen induktiven Übertrager nach Art eines Transformators bildet. Dieser Übertrager funktioniert prinzipiell auch ohne Kern bzw. Kernmaterial mit reinen Luftspulen.

Die Übertrager an den beiden Anschlusselementen 11 dienen zusammen mit den elektrischen Leitern 12 in der Schlauchleitung 10 zur Übertragung von Energie beziehungsweise Versorgungsspannungen und/oder zur Übertragung von Signalen, wie Sensorsignalen und Steuersignalen. Dies wird gemäß Figur 1 in Verbindung mit einem beispielsweise als Zweidrahtsensor ausgebildeten Sensor 21 erläutert. Es gilt in gleicher Weise für andere Sensoren und Aktoren.

Eine Spannungsversorgungseinrichtung 22 erzeugt eine Wechselspannung im Frequenzbereich zwischen 10 kHz und 100 kHz. Diese Wechselspannung wird transformatorisch von der äußeren Spule 12 des linken Anschlusselements 11 auf die innere Spule 15 übertragen und gelangt über die elektrischen Leiter 12 in der Schlauchleitung 10 zur inneren Spule 15 des rechten Anschlusselements 11, von wo aus eine Übertragung auf dessen äußere Spule 20 erfolgt. Die dann am Sensor 21 anliegende Wechselspannung wird mittels der üblicherweise in einem Zweidrahtsensor integrierten Verpolschutzdiode gleichgerichtet, um die ebenfalls dort regelmäßig vorhandenen Siebkondensatoren aufzuladen, die dann zur Spannungsversorgung des Sensors 21 dienen. Falls ein Sensor ohne Verpolschutzdiode und ohne Siebkondensatoren vorliegen sollte, so müssten diese Elemente noch zusätzlich vorgesehen werden, wobei auch andere Energiespeicher, wie Akkus, dienen können. Ein zusätzlicher Kondensator 23 ist parallel zur äußeren Spule 20 geschaltet, der allerdings optional ist.

Die Übertragung des Sensorsignals des Sensors 21 erfolgt in umgekehrter Richtung in entsprechender Weise. Die Spannungsversorgungseinrichtung 22 weist einen Innenwiderstand auf, der merklich vom Wert Null verschieden ist. An diesem Widerstand fällt eine messbare Spannung ab, sobald der Sensor 21 schaltet oder seinen Innenwiderstand erniedrigt, was selbstverständlich auch in umgekehrter Weise erfolgen kann. Dieser Spannungsabfall oder diese Spannungsveränderung am Innenwiderstand der Spannungsversorgungseinrichtung 22 wird in der Auswerteeinrichtung 24 erfasst und in ein entsprechendes Sensorsignal umgewandelt und gegebenenfalls weitergeleitet.

Alternativ hierzu kann die Übertragung von Sensorsignalen und Steuersignalen auch durch Amplituden-, Phasen-, Frequenz- oder Pulsmodulation erfolgen, wobei die jeweiligen Signale auf die Übertragungsfrequenz aufmoduliert und auf der jeweils anderen Seite demoduliert werden. Die Auswerteeinrichtung 24 ist bei dieser Ausführung als Modulations- und/oder Demodulationsstufe ausgebildet.

Gemäß Figur 2 wird ein besonders einfaches und kostengünstiges Übertragungsverfahren für Sensorsignale verwendet, das dort zur Erfassung der Endlagenposition eines Kolbens 25 in einem fluidischen Zylinder 26 dient. Ein Anschlusselement 11 ist an einem Endbereich des Zylinders 26 über eine Anschlussaufnahme 27 mit dem einen Zylinderraum 28 verbunden und dient zunächst der fluidischen Zuleitung. Das Anschlusselement 11 benötigt bei dieser Ausführung keine äußere induktive Spule 20, sondern lediglich die innere, mit der Schlauchleitung 10 verbundene Spule 15. Der Kolben 25 ist mit einem Permanentmagneten 29 versehen. Der Kern der Spule 15 wird durch das Magnetfeld des Permanentmagneten 29 bei entsprechender Annäherung ganz oder teilweise in die Sättigung getrieben. Als Folge davon wird der Innenwiderstand der Spule 15 erniedrigt. Wie bereits beschrieben, führt diese Widerstandsveränderung zu einem Spannungsabfall in der Spannungsversorgungseinrichtung 22, der als Sensorsignal ausgewertet werden kann.

Die beschriebenen Verfahren zur Signalübertragung und Energieübertragung lassen sich auch zur kontaktlosen Übertragung an drehenden Wellen oder zur kontaktlosen Übertragung von Positionssensorsignalen in der Zylindernut eines Arbeitszylinders einsetzen. Der Sensor besteht dabei lediglich aus der beschriebenen Spule mit ferromagnetischem Kern, während die Senderspule aus einer langen Spule besteht, die in die Zylindernut eingelegt ist.

Anstelle der gemäß den Figuren 3 und 4 beschriebenen Kontaktierung der inneren Spule 15 mit den elektrischen Leitern 12 in der Schlauchleitung 10 kann diese Kontaktierung auch gemäß der in den Figuren 5 und 6 dargestellten Ausführung erfolgen. Ein modifiziertes T-förmiges flaches Plättchen 30 trägt wiederum die Spule 15 und besitzt einen entsprechenden Querzweig 31 als Jochglied. Von diesem Querzweig 31 aus erstrekken sich parallel zum linearen Trägerbereich für die Spule 15 verlaufende, einander gegenüberliegende Kontaktzungen 32, die jeweils gegenüberliegend an der Innenseite der Schlauchleitung 10 verlaufende flächige Kontaktbereiche als elektrische Leiter 33 aufweisen, an denen die Kontaktzungen 32 anliegen. Zur besseren Kontaktierung können diese noch mit nicht dargestellten Kontaktzähnen oder Kontaktkanten versehen sein.

Es gibt auch Ausführungen von Schlauchleitungen 10, bei denen ein flächiger elektrischer Leiter an der Innenseite und ein flächiger elektrischer Leiter an der Außenseite angebracht ist. Die Kontaktelemente des jeweiligen Plättchens müssen entsprechend der jeweiligen Anordnung und Form der elektrischen Leiter ausgestaltet werden.

## Patentansprüche

1. Verfahren zur elektrischen Signal- und/oder Energieübertragung über eine flexible fluidische Schlauchleitung (10), deren Enden mit fluidischen Anschlusselementen (11) versehen sind und an oder in deren Leitungswandung wenigstens zwei elektrische Leiter (12; 33) integriert sind, **dadurch gekennzeichnet, dass** die Einkopplung und/oder Auskopplung der elektrischen Signale und/oder der elektrischen Energie an den Anschlusselementen (11) kontaktlos über je wenigstens eine induktive Spule (15, 20) erfolgt.

2. Verfahren nach Anspruch 1, **dadurch gekennzeichnet, dass** die elektrische Ein- und/oder Auskopplung transformatorisch erfolgt, wobei vorzugsweise hochpermeable Kerne vorgesehen sind.

3. Verfahren nach Anspruch 1 oder 2, **dadurch gekennzeichnet, dass** zur elektrischen Signaleinkopplung ein hochpermeabler Kern der induktiven Spule (15) mittels eines Permanentmagneten (29) ganz oder teilweise in die Sättigung gebracht wird.

4. Verfahren nach einem der vorhergehenden Ansprüche, **dadurch gekennzeichnet, dass** zur elektrischen Signalübertragung das Signal, insbesondere ein Sensor- oder Steuersignal, mittels Amplituden-, Phasen-, Frequenz- oder Pulsmodulation an einem Anschlusselement (11) aufmoduliert und am anderen Anschlusselement (11) demoduliert wird.

5. Verfahren nach einem der Ansprüche 1 bis 3, **dadurch gekennzeichnet, dass** zur elektrischen Signalübertragung am einen Anschlusselement (11) eine Spule (20, 15) signalabhängig mit einem elektrischen Widerstandselement belastet wird, und dass der daraus resultierende Spannungsabfall am Innenwiderstand einer mit dem anderen Anschlusselement (11) verbundenen Spannungsversorgungseinrichtung (22) als übertragendes Mess- oder Steuersignal ausgewertet wird.

6. Verfahren nach einem der vorhergehenden Ansprüche, **dadurch gekennzeichnet, dass** zur elektrischen Signal- und/oder Energieübertragung eine Wechselspannung mit einer Frequenz zwischen 10 kHz und 100 kHz verwendet wird.

7. Vorrichtung zur elektrischen Signal- und/oder Energieübertragung über eine flexible Schlauchleitung (10), deren Endbereiche in fluidischen Anschlusselementen (11) gehalten sind und an oder in deren Leitungswandung wenigstens zwei elektrische Leiter (12; 33) integriert sind, **dadurch gekennzeichnet, dass** in beiden Endbereichen der Schlauchleitung (10) jeweils eine mit den Leitern (12; 33) verbundene induktive Spule (15) zum Ein- und/oder Auskoppeln der elektrischen Signale und/oder der elektrischen Energie angeordnet ist.

8. Vorrichtung nach Anspruch 7, **dadurch gekennzeichnet, dass** die elektrische Spule (15) mit einem hochpermeablen Kern, insbesondere Flachkern, versehen ist.

9. Vorrichtung nach Anspruch 8, **dadurch gekennzeichnet, dass** die Anschlusselemente (11) aus einem magnetisch permeablen Material bestehen, wobei der Kern insbesondere mit einem sich zur Innenwandung des jeweiligen Anschlusselements (11) erstreckenden Jochglied (16; 31) versehen ist, und wobei der Kern und das damit verbundene Jochglied (16; 31) vorzugsweise als einen geringen Strömungswiderstand darstellendes Plättchen oder Platine in Flachbauweise ausgebildet oder daran angeordnet sind.

10. Vorrichtung nach einem der Ansprüche 7 bis 9, **dadurch gekennzeichnet, dass** die Spule (15) in der Schlauchleitung (10) zusammen mit einer im oder am entsprechenden Anschlusselement (11) angeordneten weiteren Spule (20) jeweils einen transformatorischen Übertrager bildet.

11. Vorrichtung nach Anspruch 10, **dadurch gekennzeichnet, dass** an die weitere Spule (20) des einen Anschlusselements (11) ein Sensor (21) und an die weitere Spule (20) des anderen Anschlusselements (11) eine einen Innenwiderstand aufweisende Spannungsversorgungseinrichtung (22) angeschlossen ist, die vorzugsweise eine Versorgungswechselspannung von 10 kHz bis 100 kHz aufweist und dass Mittel zur Erfassung und Auswertung des Spannungsabfalls an diesem Innenwiderstand vorgesehen sind.

12. Vorrichtung nach einem der Ansprüche 8 bis 9, **dadurch gekennzeichnet, dass** der Kern in Abhängigkeit einer Position eines Permanentmagneten (29) ganz oder teilweise in magnetische Sättigung ist.

13. Vorrichtung nach einem der Ansprüche 7 bis 10, **dadurch gekennzeichnet, dass** Amplituden-, Phasen-, Frequenz- oder Pulsmodulationsmittel zur Modulation und Demodulation der zu übertragenden Signale, insbesondere Sensorsignale, vorgesehen sind.

14. Vorrichtung nach einem der Ansprüche 7 bis 13, **dadurch gekennzeichnet, dass** die Verbindung der elektrischen Spule (15) in der Schlauchleitung (10) mit deren Leitern (12; 33) über mit der Spule (15) elektrisch verbundene Kontaktelemente (17; 32) erfolgt.

15. Vorrichtung nach einem der Ansprüche 7 bis 14, **dadurch gekennzeichnet, dass** der über die Anschlusselemente (11) und die Leiter (12; 33) in der Schlauchleitung (10) insbesondere transformatorisch mit Wechselspannung versorgte Aktor oder Sensor (21) Mittel zur Umwandlung dieser Wechselspannung in eine Versorgungsgleichspannung enthält, vorzugsweise eine Verpolschutzdiode.

## Claims

1. Method for electrical signal and/or energy transmission over a flexible fluidic hose line (10), the ends of which are provided with fluidic connection elements (11), and on or in their duct wall are integrated at least two electrical conductors (12; 33), **characterised in that** the coupling and/or decoupling of the electrical signals and/or the electrical energy is or are effected at the connection elements (11), without contact, over at least one inductive coil (15, 20) in each case.

2. Method according to claim 1, **characterised in that** the electrical coupling and/or decoupling is effected by transformer, wherein preferably highly permeable cores are provided.

3. Method according to claim 1 or 2 **characterised in that**, for electrical signal coupling, a highly permeable core of the inductive coil (15) is brought wholly or partly into saturation by means of a permanent magnet (29).

4. Method according to any of the preceding claims, **characterised in that**, for electrical signal transmission the signal, in particular a sensor or control signal, is modulated by amplitude-, phase-, frequency- or pulse-modulation to one connection element (11), and demodulated at the other connection element (11).

5. Method according to any of claims 1 to 3, **characterised in that** for electrical signal transmission at a connection element (11), one coil (15, 20) is loaded, depending on the signal, with an electrical resistance element, and that the resulting voltage drop at the induced of a voltage supply device (22) connected to the other connection element (11) is evaluated as the transmitted measurement or control signal.

6. Method according to any of the preceding claims, **characterised in that** an AC voltage with a frequency of between 10 kHz and 100 kHz is used for the electrical signal and/or energy transmission.

7. Device for electrical signal and/or energy transmission over a flexible hose line (10), the end sections of which are held in fluidic connection elements (11), and on or in the duct wall of which are integrated at least two electrical conductors (12; 33), **characterised in that** in both end sections of the hose line (10) in each case one inductive coil (15) connected to the conductors (12; 33) is provided for the coupling or decoupling of the electrical signals and/or electrical energy.

8. Device according to claim 7, **characterised in that** the electrical coil (15) is provided with a highly permeable core, in particular a flat core.

9. Device according to claim 8, **characterised in that** the connection elements (11) are made of a magnetic permeable material, wherein the core is provided in particular with a yoke element (16; 31) extending to the inner wall of the respective connection element (11), and wherein the core and its associated yoke element (16; 31) are in the form of or mounted on a chip or printed circuit board representing a low flow resistance.

10. Device according to any of claims 7 to 9, **characterised in that** the coil (15) in the hose line (10), together with a further coil (20) mounted in or on the relevant connection element (11), forms in each case a transformer-type transmitter.

11. Device according to claim 10, **characterised in that** there is connected to the further coil (20) of the one connection element (11) a sensor (21) and to the further coil (20) of the other connection element (11) a voltage supply device (22) which has the internal resistance and preferably has an AC supply voltage of 10 kHz to 100 kHz, and that means for detecting and evaluating the voltage drop at this internal resistance are provided.

12. Device according to any of claims 8 or 9, **characterised in that** the core, depending on a position of a permanent magnet (29), is wholly or partly in a state of magnetic saturation.

13. Device according to any of claims 7 to 10, **characterised in that** amplitude, phase, frequency or pulse modulation means are provided for modulation and demodulation of the signals to be transmitted, in particular sensor signals.

14. Device according to any of claims 7 to 11, **characterised in that** the connection of the electrical coil (15) in the hose line (10) with its conductors (12; 33) is effected via contact elements (17; 32) electrically connected to the coil (15).

15. Device according to any of claims 7 to 14, **characterised in that** the actuator or sensor (21) supplied via the connection elements (11) and the conductors (12; 33) in the hose line (10) with AC voltage, in particular by transformer, contains means for converting this AC voltage into a supply DC voltage, preferably a polarity reversal protection diode.

## Revendications

1. Procédé servant à la transmission électrique de signaux et/ou d'énergie par l'intermédiaire d'un conduit en tuyau souple (10) fluidique flexible, dont des extrémités sont pourvues d'éléments de raccordement (11) fluidiques et au niveau de la paroi de conduit duquel ou dans la paroi de conduit duquel sont intégrés au moins deux conducteurs (12 ; 33) électriques, **caractérisé en ce que** le couplage et/ou le découplage des signaux électriques et/ou de l'énergie électrique au niveau des éléments de raccordement (11) se fait sans contact par l'intermédiaire respectivement d'au moins une bobine inductive (15, 20).

2. Procédé selon la revendication 1, **caractérisé en ce que** le couplage et/ou le découplage électrique se font à la manière de transformateurs, sachant que sont prévus de préférence des noyaux hautement perméables.

3. Procédé selon la revendication 1 ou 2, **caractérisé en ce qu'**un noyau hautement perméable de la bobine inductive (15) est amené en partie ou en totalité à saturation au moyen d'un aimant permanent (29).

4. Procédé selon l'une quelconque des revendications précédentes, **caractérisé en ce que** le signal, en particulier un signal de capteur ou de commande est modulé au niveau d'un élément de raccordement (11) et est démodulé au niveau de l'autre élément de raccordement (11) au moyen d'une modulation d'amplitudes, de phases, de fréquences ou d'impulsions aux fins de la transmission électrique de signaux.

5. Procédé selon l'une quelconque des revendications 1 à 3, **caractérisé en ce qu'**une bobine (20, 15) est connectée à un élément de résistance électrique en fonction du signal sous la transmission électrique de signaux au niveau d'un élément de raccordement (11), et **en ce que** la chute de tension en résultant au niveau de la résistance interne d'un dispositif d'alimentation en tension (22) connecté à l'autre élément de raccordement (11) est évaluée en tant que signal de mesure ou de commande de transmission.

6. Procédé selon l'une quelconque des revendications précédentes, **caractérisé en ce qu'**une tension alternative présentant une fréquence comprise entre 10 kHz et 100 kHz est utilisée pour la transmission électrique de signaux et/ou d'énergie.

7. Dispositif servant à la transmission électrique de signaux et/ou d'énergie par l'intermédiaire d'un conduit en tuyau souple (10) flexible, dont les zones d'extrémité sont maintenues dans des éléments de raccordement (11) fluidiques et sur ou dans la paroi de conduit duquel sont intégrés au moins deux conducteurs (12 ; 33) électriques, **caractérisé en ce que** respectivement une bobine inductive (15) connectée aux conducteurs (12; 33) pour coupler et/ou à découpler les signaux électriques et/ou l'énergie électrique est disposée dans les deux zones d'extrémité du conduit en tuyau souple (10).

8. Dispositif selon la revendication 7, **caractérisé en ce que** la bobine électrique (15) est pourvue d'un noyau hautement perméable, en particulier d'un noyau plat.

9. Dispositif selon la revendication 8, **caractérisé en ce que** les éléments de raccordement (11) sont constitués d'un matériau magnétiquement perméable, sachant que le noyau est pourvu en particulier d'un organe de culasse (16 ; 31) s'étendant en direction de la paroi intérieure de l'élément de raccordement (11) respectif, et sachant que le noyau et l'organe de culasse (16 ; 31) connecté à ce dernier sont réalisés de préférence sous la forme d'une plaquette ou d'une platine de type plat représentant une faible résistance à l'écoulement ou sont disposés au niveau de cette dernière.

10. Dispositif selon l'une quelconque des revendications 7 à 9, **caractérisé en ce que** la bobine (15) dans le conduit en tuyau souple (10) forme conjointement avec une autre bobine (20) disposée dans ou au niveau de l'élément de raccordement (11) correspondant respectivement un système de transmission de type transformateur.

11. Dispositif selon la revendication 10, **caractérisé en ce qu'**est raccordé, à l'autre bobine (20) d'un des éléments de raccordement (11), un capteur (21), et **en ce qu'**est raccordé à l'autre bobine (20) de l'autre élément de raccordement (11) un dispositif d'alimentation en tension (22) présentant une résistance intérieure, qui présente de préférence une tension alternative d'alimentation allant de 10 kHz à 100 kHz, et **en ce que** sont prévus des moyens servant à détecter et à analyser la chute de tension au niveau de ladite résistance interne.

12. Dispositif selon l'une quelconque des revendications 8 à 9, **caractérisé en ce que** le noyau est en saturation magnétique en totalité ou en partie selon une position dépendante d'un aimant permanent (29).

13. Dispositif selon l'une quelconque des revendications 7 à 10, **caractérisé en ce que** sont prévus des moyens de modulation d'amplitudes, de phases, de fréquences ou d'impulsions pour moduler et à démoduler les signaux de transmission, en particulier les signaux de capteur.

14. Dispositif selon l'une quelconque des revendications 7 à 13, **caractérisé en ce que** la connexion de la bobine électrique (15) dans le conduit en tuyau souple (10) aux conducteurs (12 ; 33) de ce dernier se fait par l'intermédiaire d'éléments de contact (17 ; 32) connectés électriquement à la bobine (15).

15. Dispositif selon l'une quelconque des revendications 7 à 14, **caractérisé en ce que** l'actionneur ou le capteur (21) alimenté en tension alternative en particulier à la manière de transformateurs par l'intermédiaire des éléments de raccordement (11) et des conducteurs (12 ; 33) dans le conduit en tuyau souple (10) comporte des moyens servant à la conversion de ladite tension alternative en une tension d'alimentation continue, de préférence une diode de protection contre l'inversion de polarité.
